# EUROPÄISCHE PATENTANMELDUNG

(11) **EP 2 151 341 A1**
(43) Veröffentlichungstag der Anmeldung: **10.02.2010**
(21) Anmeldenummer: 09009814.6
(22) Anmeldetag: 29.07.2009
(51) Int. Cl.: B60J 7/12

(54) **Spannbügel**

(30) Priorität: 06.08.2008 DE 102008036632
(71) Anmelder: Magna Car Top Systems GmbH, 74321 Bietigheim-Bissingen (DE)
(72) Erfinder: Käsweber, Hubert, Dipl.-Ing., 71636 Ludwigsburg (DE); Bergerhoff, Harald, Dipl.-Ing., 71636 Ludwigsburg (DE)

(57) **Zusammenfassung**

Spannbügel (15) für ein zusammenlegbares Faltverdeck eines Kraftfahrzeugs, insbesondere für einen Personenkraftwagen.
Bei einem Faltverdeck für Kraftfahrzeuge befindet sich ein Spannbügel (15) zwischen dem Faltverdeck und der Fahrzeugkarosserie im hinteren Dachöffnungsbereich des Personenkraftwagens. Der Spannbügel (15) ist mit der Fahrzeugkarosserie verbunden, wobei der Verdeckstoff (33) über eine Halterung an dem Spannbügel (15) befestigt ist.
Der Spannbügel (15) besteht aus einer Trägerschiene (16) und einer mit der Trägerschiene (16) verbundenen Spannleiste (17), womit der Spannbügel relativ zum Fahrzeugaufbau zu verstellen ist und weiter eine Einstellbarkeit des Verdeckstoffs (33) über den Spannbügel (15) erfolgen kann.
Der Spannbügel (15) wird vorteilhaft für Kraftfahrzeuge, insbesondere Personenkraftfahrzeuge eingesetzt.

## Beschreibung

Die Erfindung betrifft einen Spannbügel für Fahrzeuge, vorzugsweise für Kraftfahrzeuge, nach dem Oberbegriff des Anspruches 1.

Es sind Spannbügel bekannt, bei denen der Verdeckstoff am Spannbügel, beispielsweise über eine Nut und einen Keder im Spannbügel befestigt ist. Hierzu ist der Keder im Endbereich in den Verdeckstoff oder in Form einer Leiste am Stoffende angenäht. Der Keder/Leiste wird seitlich in die zur Kederform korrespondierende Nut eingeschoben, so dass der Verdeckstoff über den Spannbügel gespannt werden kann.

In der US 2,772,114 wird ein Faltverdeck mit einem Verdeckbezug für einen Personenkraftwagen beschrieben. Der Verdeckbezug ist in einem rückwärtigen Fahrzeugbereich unterhalb einer festen hinteren Aufbauwand unter Zwischenschaltung einer Einstellvorrichtung an einer inneren Aufbaukonsole festgelegt.

Ein der Fahrzeugrückseite zugekehrter Endabschnitt liegt hierzu an einem Spann-element an, das mittels einer Schraube an der Aufbaukonsole gehalten wird. Die Aufbaukonsole ist mit einer Gewindemutter versehen, in die diese Schraube hineingedreht ist. Auf ähnliche Weise ist der Verdeckbezug an den Längsseiten des Aufbaus befestigt.

Auch aus der EP 0 803 391 B1 geht ein Faltverdeck für Fahrzeuge hervor. Das Faltverdeck besitzt am hinteren Rand einen den Verdeckbezug aufnehmenden Spannbügel. Der Spannbügel stützt sich in einer Schließstellung des Faltverdecks unter Zwischenschaltung eines Dichtkörpers an einer Unterseite eines Aufbauteils ab. Wesentlich dabei ist, dass der Spannbügel über eine einstellbare Entlastungseinrichtung mit einem feststehenden Überrollbügel verbunden ist.

Der Erfindung liegt die Aufgabe zugrunde, einen Spannbügel für ein bewegbares Stoffverdeck so auszubilden, dass der Spannbügel relativ zum Fahrzeugaufbau zu verstellen ist und unabhängig hiervon eine Einstellbarkeit des Verdeckstoffs über den Spannbügel erfolgen kann. Mit der geringsten Anzahl von Teilen sollen einfache und kostengünstige Einstellmöglichkeiten geschaffen werden.
Diese Aufgabe wird erfindungsgemäß mit den kennzeichnenden Merkmalen des Anspruches 1 gelöst.

Bei dem erfindungsgemäßen Spannbügel wird besonderen Wert auf eine Einstellbarkeit der Verdeckstoffspannung gelegt, wobei unabhängig von dieser Stoffeinstellbarkeit der Spannbügel in seiner Position am Fahrzeugaufbau zu verstellen ist.

Die Aufbauseitige Verstellbarkeit des Spannbügels wird zur Positionseinstellung gegenüber angrenzenden Bauteilen wie beispielsweise einer Heckklappe benötigt. Die im Fahrzeugrohbau auftretenden Toleranzen können dazu führen, dass unterschiedliche oder zum Teil sehr große oder sehr kleine Spalte zwischen dem Spannbügel und dem angrenzenden Bauteil auftreten können. Um diese Spalte entsprechend zu verkleinern bzw. Schrägstellungen kompensieren zu können, wird der Spannbügel in seiner Verschraubung gelöst und entsprechend verschoben. Nach dieser Einstellung/Anpassung wird der Spannbügel wieder fest mit dem Fahrzeugaufbau verschraubt.

Bei einer solchen Einstellung/ Verstellung kann es je nach Verstellrichtung zu einer Überlänge (lose Falten) oder zu einer extremen Stoffspannung kommen. Dies wird dadurch verhindert, dass ein Teil des Spannbügels selber eine verstellbare Vorrichtung darstellt, an der der Verdeckstoff befestigt ist. Dieser Teil des Spannbügels kann relativ zum mit dem Fahrzeugaufbau verbundenen, separat zu verstellenden Teil des Spannbügels verstellt werden.

Beide Verstellungen werden durch relative Verschiebebewegungen erzeugt. Hierbei kann die Schiebeebene zwischen beiden Spannbügelteilen eine Schiebeebene aufweisen die von der Ausrichtung der Schiebeebene des Spannbügels zum Fahrzeugaufbau abweicht. Durch diese unterschiedlichen Schiebeebenen lassen sich sehr feine Einstellungen bezüglich des Verdeckstoffs erreichen. Auch kann bei entsprechend angeordneter Schiebeebene zwischen den beiden Spannbügelteilen zusätzlich zur Stoffspannung ein Teil des Spannbügels eine in die Karosserie eintauchenden oder hervorstehenden Position einnehmen.

Erfindungsgemäß erfolgt die Verdeckstoffbefestigung mittels einer U-förmigen Halteleiste, die auf eine Spannleiste aufgebracht ist. Die Spannleiste ist mittels Verschraubungen mit dem weiteren Teil des Spannbügels, einer Trägerschiene verschraubt. Die Trägerschiene ist wiederum mit dem Fahrzeugaufbau verschraubt, wobei die Spannleiste unabhängig verstellt werden kann.

Weitere Merkmale der Erfindung ergeben sich aus den weiteren Ansprüchen, der Beschreibung und den Zeichnungen.

Die Erfindung wird anhand einer in den Zeichnungen dargestellten Ausführungsform näher erläutert. Es zeigt:
Fig. 1 ein Fahrzeugheck mit eingebautem Spannbügel,
Fig. 2 eine perspektivische Darstellung des Spannbügels mit Schnitt in Fahrzeuglängsebene,
Fig. 3 eine perspektivische Schnittdarstellung des Spannbügels in Einbaulage.

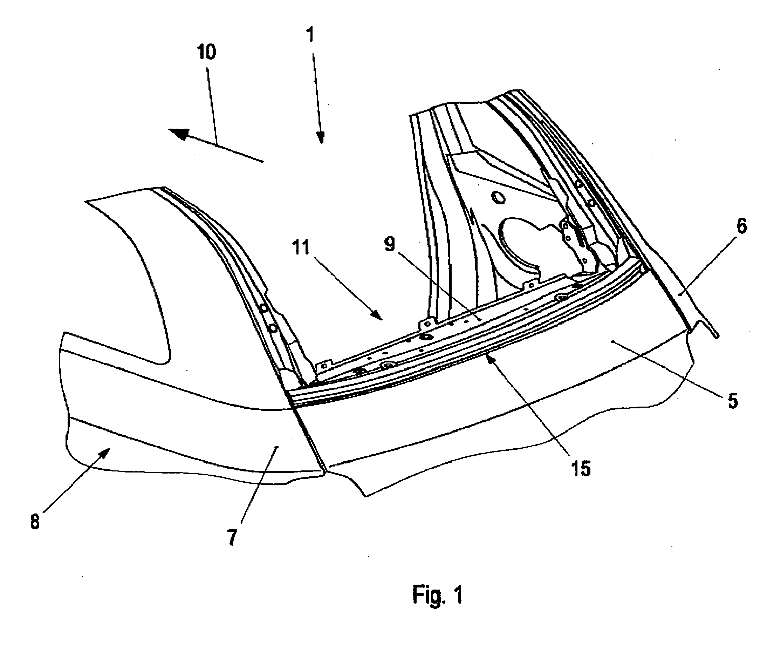

In Figur 1 ist ein Fahrzeugheck mit eingebautem Spannbügel 15 dargestellt. Die Fahrzeugkarosserie 8 weist eine Dachöffnung 1 auf, die in ihrer Breite im Wesentlichen von einem Dachseitenträger zum gegenüberliegenden Dachseitenträger reicht. Entgegen der Fahrtrichtung 10 reicht die Dachöffnung 1 bis ca. zur Hutablage 11, die in vorliegender Ausführung mit der Position des Spannbügels 15 nahezu übereinstimmt. Selbstverständlich kann die Dachöffnung 1 weiter oberhalb oder weiter unterhalb des Spannbügels 15 reichen.

Der Spannbügel 15 kann aus einem oder mehreren Teilen bestehen, die beispielsweise aus einem Aluminium-Strangpressprofil hergestellt sind. Seine Formgebung ist vorzugsweise der in seinem Anbindungsbereich vorgegebenen Fahrzeugkontur angepasst und weist oft eine Krümmung in Fahrzeuglängs- und/oder in Fahrzeughochrichtung auf. Auch können die Enden des Spannbügels 15 eine stärkere Krümmung aufweisen, so dass der Spannbügel 15 insgesamt eine U-förmige Form aufzeigt.

In Fig. 1 ist der Spannbügel 15 leicht in Fahrzeuglängs- und in Fahrzeughochrichtung gebogen. Seine Enden liegen innerhalb der Dachöffnung 1 und werden seitlich durch die hinteren Enden der Dachseitenträger, bzw. durch die linke und rechte Fahrzeugseitenwand 6, 7 begrenzt. Im hinteren Bereich des Fahrzeughecks schließt der Spannbügel 15 in etwa mit der oberen Kante der Heckklappe 5 ab. Auch die Heckklappe 5 liegt innerhalb der Fahrzeugaußenhaut und schließt mit der rechten und linken Fahrzeugseitenwand 6, 7 ab.

Zwischen der Heckklappe 5 und dem Spannbügel 15 befindet sich ein Spalt, aus dem der Verdeckstoff hervortritt und in Richtung der Dachöffnung 1 geführt wird.

Der Spannbügel 15 selber ist an einem Teil der Fahrzeugkarosserie 8 befestigt, der als Hutablage 11 oder auch als hinterer Querträger 9 ausgelegt sein kann.

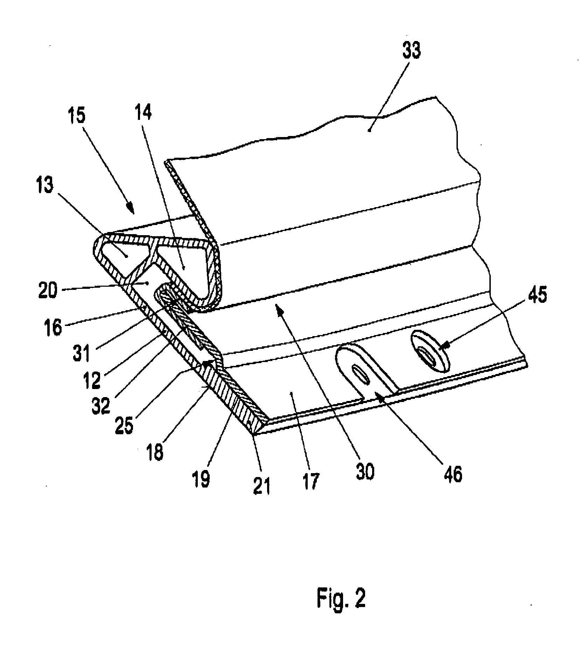

Die in Fig. 2 abgebildete perspektivische Darstellung des Spannbügels 15 zeigt einen Schnitt in Fahrzeuglängsebene, wobei der Spannbügel 15 aus einer Träger-schiene 16 und einer Spannleiste 17 gebildet wird. Die Trägerschiene 16 ist vorzugsweise ein Aluminium-Strangpressprofil, das im Wesentlichen aus einer unteren Leiste 12 besteht und an ihrem dem Verdeckstoff 33 abgewandten Ende eine entlang der Trägerschiene 16 verlaufende Verdickung 21 aufweist. An ihrer gegenüberliegenden Seite ist die Trägerschiene 16 im Wesentlichen mit einer, von der unteren Leiste 12 abstehenden, dreieckigen Geometrie ausgebildet. Diese dreieckige Form ist mit Rippen und Hohlkammern 13, 14 ausgearbeitet, um die Stabilität sowie die Umlenkung des Verdeckstoffs 33 zu ermöglichen. Die Hohlkammern 13, 14 sind in ihrer Formgebung ebenfalls von dreieckiger Struktur, so dass ein Schenkel des Dreiecks der äußeren Hohlkammer 13 eine vertikale Wand eines Aufnahmeraums 20 bildet. Die Unterkante der dreieckigen Struktur der mittleren Hohlkammer 14 bildet wie die untere Leiste 12 der Trägerschiene 16 eine horizontale Begrenzung des Aufnahmeraums 20 aus.

In diesen Hohlraum ragt eine auf der Verdickung der Trägerschiene 16 aufliegende Spannleiste 17 hinein, wobei die Spannleiste 17 etwa in ihrer Mitte stufenförmig ausgebildet ist. Die etwa zur Hälfte in den von der Trägerschiene 16 gebildeten Aufnahmeraum 20 hineinragende Spannleiste 17 ist in ihrer Kontur der Trägerschiene 16 angepasst und kann aus dem gleichen oder einem anderen Material bestehen.

Der Verdeckstoff ist an seinem dem Spannbügel 15 zugewandten Ende fest mit einer U-förmigen Halteleiste 32 versehen. Die Halteleiste 32 ist beispielsweise mittels eines Klebstoffs, durch vernähen oder durch eine Kombination beider Verfahren mit dem Verdeckstoff verbunden. Auch können andere Verbindungsverfahren wie Schweißen, Klemmvorrichtungen oder Halteklammern zur Anwendung kommen.

Die Halteleiste 32 ist unabhängig vom Verbindungsverfahren mit dem Verdeckstoff aus einem formstabilen Material hergestellt, wobei die Halteleiste 32 über das in den Aufnahmeraum 20 ragende Ende der Spannleiste 17 geschoben wird. Eine Befestigung der Halteleiste 32 über eine Verklebung oder eine Klammerverbindung mit der Spannleiste 17 kann erfolgen, ist aber durch die Auslegung der Abmessungen des Aufnahmeraums und die Verwendung eines geeigneten Werkstoffs für die Halteleiste 32 nicht zwingend notwendig.

Der an der Spannleiste 17 angebrachte Verdeckstoff wird im Austrittsbereich aus dem Aufnahmeraum 20 über wenigstens eine verrundete Ecke der Trägerschiene 16 in Richtung Dachöffnung 1 umgelenkt. Um den Verdeckstoff mit Spannung zu beaufschlagen, bzw. die Spannung des Verdeckstoffs zu steigern, kann die Spannleiste 17 weiter in den Aufnahmeraum 20 hineingeschoben werden. Zur Verringerung der Spannung des Verdeckstoffs wird die Spannleiste 17 entgegengesetzt aus dem Aufnahmeraum 20 herausgeschoben. Hierzu wird die Spannleiste 17 im Auflagebereich der Verdickung 21 der Trägerschiene 16 mittels Schrauben auf der Trägerschiene 16 geklemmt und festgeschraubt. Zum Verstellen der Spannleiste 17 sind schlitzförmige Öffnungen in der Spannleiste 17 eingebracht, die entsprechend ihrer Dimensionierung eine Verschiebung ermöglichen.

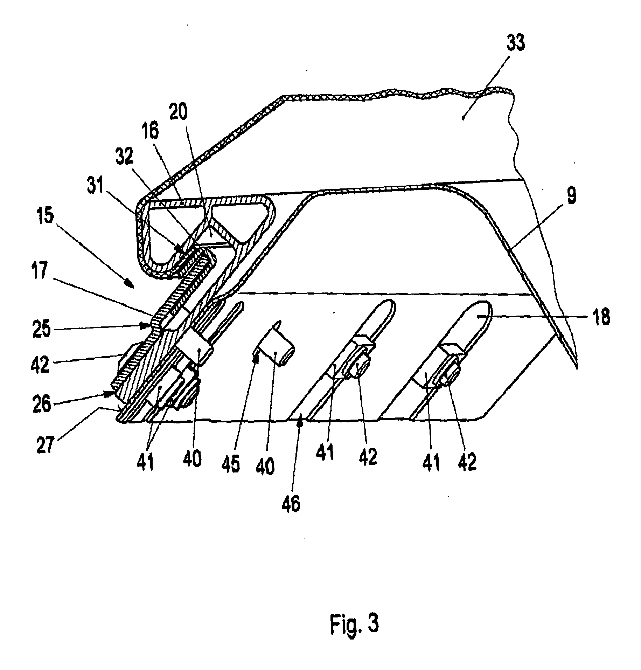

In Fig. 3 ist eine perspektivische Schnittdarstellung des Spannbügels 15 in Einbaulage abgebildet, wobei der Spannbügel 15 an einem karosseriefesten Bauteil befestigt ist. Hierzu wird die Trägerschiene 16 mit ihrer Unterseite auf eine aus der Karosserie/Rohbau 8 hervorstehende Auflagefläche 19 aufgelegt und mit dieser verschraubt.

Unabhängig von der Verschiebbarkeit der Spannleiste 17 kann die Trägerschiene 16 ebenfalls verschoben werden. Diese Verschiebbarkeit ist von Vorteil, wenn bspw. die Position des Spannbügels 15 zur Einstellung des Spaltmaßes zwischen dem Spannbügel 15 und der Karosserie 8, vorzugsweise zur Heckklappe 5, verändert werden soll. Hierzu kann die Verschiebbarkeit der Spannleiste 17 bei gegensätzlicher Verschiebung zwischen Trägerschiene 16 und Spannleiste 17 die auftretende Verdeckstoffspannung kompensiert werden.

Die Verstellung der Trägerschiene 16 erfolgt beispielsweise durch die Trägerschiene 16 hindurchragenden Schrauben 40, wobei die Trägerschiene 16 entsprechend der Verschiebbarkeit schlitzförmige Öffnungen aufweist. Zur Verschiebung der Trägerschiene 16 werden diese Schrauben 40 gelockert und nach der Verschiebung der Trägerschiene 16 wieder fest mit der Karosserie/Rohbau 8 verschraubt.

Eine weitere Variante sieht zur Verschiebung der Trägerschiene 16 schlitzförmige Öffnungen 45 im Durchgangsbereich der Karosserie/Rohbau 8 vor. Dabei wir eine Mutter bzw. ein konterndes Bauteil auf der Innenseite der Karosserie/Rohbau 8 gelockert um den gesamten Spannbügel 15 verschieben zu können. Dieser wir bei Erreichen seiner endgültigen Lage wieder fest mit dem konternden Bauteil verschraubt.

Für durch die Trägerschiene 16 hindurchragende Verschraubungen der Spannleiste 17 mit der Tragschiene 16 können wie in Fig. 3 abgebildet schlitzförmige Ausnehmungen 46 für die Befestigungsmuttern 41 vorgesehen sein. Somit wird es möglich, dass entweder die gesamte Tragschiene 16 mit montierter Spannleiste, oder bei hindurchragender Spannleistenverschraubung nur eine Verschiebung der Tragschiene 16 durchführbar ist.

## Patentansprüche

1. Spannbügel für ein zusammenlegbares Faltverdeck eines Kraftfahrzeugs, insbesondere für einen Personenkraftwagen, wobei sich der Spannbügel, zwischen dem Faltverdeck und der Fahrzeugkarosserie, im hinteren Dachöffnungsbereich des Personenkraftwagens befindet, welcher mit der Fahrzeugkarosserie verbunden ist und der Verdeckstoff über eine Halterung an dem Spannbügel befestigt ist, **dadurch gekennzeichnet, dass** der Spannbügel (15) aus einer Trägerleiste (16) und einer mit der Trägerleiste (16) verbundenen Spannleiste (17) besteht.

2. Spannbügel nach Anspruch 1, **dadurch gekennzeichnet, dass** die Trägerleiste (16) durch schlitzförmige Öffnungen mittels Verschraubungen (40) an der Fahrzeugkarosserie (8) verstellbar befestigt ist.

3. Spannbügel nach Anspruch 1 oder 2, **dadurch gekennzeichnet, dass** die Spannleiste (17) durch schlitzförmige Öffnungen mittels Verschraubungen (42) mit der Trägerleiste (16) verstellbar verbunden ist.

4. Spannbügel nach einem der Ansprüche 1 bis 3, **dadurch gekennzeichnet, dass** die Trägerleiste (16) einen Aufnahmeraum (20) aufweist, in den die Spannleiste (17) wenigstens teilweise hineinragt.

5. Spannbügel nach Anspruch 1 und 4, **dadurch gekennzeichnet, dass** die Trägerschiene (16) aus einer Leiste (12) und zwei dreieckigen Hohlkammern (13, 14) besteht und je eine Wand der Hohlkammern (13, 14) mit der Leiste (12) den Aufnahmeraum (20) begrenzen.

6. Spannbügel nach einem der Ansprüche 1 bis 4, **dadurch gekennzeichnet, dass** die Trägerschiene (16) im Kontaktbereich mit der Spannleiste (17) eine Verdickung (21) aufweist.

7. Spannbügel nach einem der Ansprüche 1 bis 4 und 6, **dadurch gekennzeichnet, dass** die Spannleiste (17) in etwa mittiger Lage ihrer Quererstreckung stufenförmig ausgebildet ist.

8. Spannbügel nach einem der Ansprüche 1, 4 und 5 und 7, **dadurch gekennzeichnet, dass** der Verdeckstoff (33) mittels einer Halterung an der in den Aufnahmeraum (20) hineinragenden Seite der Spannleiste (17) befestigt ist.

9. Spannbügel nach einem der Ansprüche 1 und 6. **dadurch gekennzeichnet, dass** die Halterung am Verdeckstoff (33) eine U-förmige Halteleiste (32) ist und dass die Halteleiste (32) auf die in den Aufnahmeraum (20) hineinragende Seite der Spannleiste (17) aufgeschoben ist.

10. Spannbügel nach einem der Ansprüche 1 bis 6, **dadurch gekennzeichnet, dass** die Seite des Kontaktbereichs zwischen Trägerschiene (16) und Spannleiste (17) des Spannbügels (15) von einem Teil der Fahrzeugkarosserie (8) überdeckt wird.
